(19) Europäisches Patentamt / European Patent Office / Office européen des brevets

(11) **EP 2 492 359 B1**

## (12) EUROPEAN PATENT SPECIFICATION

(45) Date of publication and mention
of the grant of the patent:
**22.02.2017 Bulletin 2017/08**

(51) Int Cl.:
*C21B 9/00* *(2006.01)*         *C21B 9/04* *(2006.01)*
*C21B 9/10* *(2006.01)*

(21) Application number: **11250609.2**

(22) Date of filing: **24.06.2011**

(54) **Method for heating a blast furnace stove**

Verfahren zum Erhitzen eines Hochofens

Procédé pour chauffer un four de haut-fourneau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2011 US 201113031941**

(43) Date of publication of application:
**29.08.2012 Bulletin 2012/35**

(73) Proprietor: **Linde Aktiengesellschaft
80331 München (DE)**

(72) Inventors:
- **Cameron, Andrew Miller
  Derbyshire DE4 5WA (GB)**
- **Richardson, Andrew Peter
  Clinton, NJ 08809 (US)**

(74) Representative: **Gellner, Bernd
Linde AG
Patente und Marken
Dr.-Carl-von-Linde-Strasse 6-14
82049 Pullach (DE)**

(56) References cited:
WO-A1-2010/133476    WO-A1-2011/065907
WO-A2-2004/094797    FR-A1- 2 847 659
GB-A- 983 499

- VAN LAAR R ET AL: "The future of hot blast stoves", AISTECH ; IRON AND STEEL TECHNOLOGY CONFERENCE PROCEEDINGS (AISTECH 2010 IRON AND STEEL TECHNOLOGY CONFERENCE - 20100503 TO 20100506 - PITTSBURGH, PA),, 3 May 2010 (2010-05-03), pages 587-595, XP009152124, ISBN: 978-1-935117-09-4
- KOWALSKI W: "OPTIMIERUNG DER BRENNER VON WINDERHITZERN IM HINBLICK AUF EINEN HOHEN CO-AUSBRAND", STAHL UND EISEN, VERLAG STAHLEISEN, DUSSELDORF, DE, vol. 110, no. 11, 1 November 1990 (1990-11-01), pages 41-50, XP000247505, ISSN: 0340-4803
- BISIO G: "Energy savings in blast furnace regenerators", PROCEEDINGS INTERSOCIETY ENERGY CONVERSION ENGINEERING CONFERENCE,, vol. 4, 1 January 1989 (1989-01-01), pages 75-80, XP009152026, ISSN: 0146-955X

**Description**

BACKGROUND OF THE INVENTION

The present invention relates to a method for heating a blast furnace stove for use with a blast furnace.

The combustion air supplied to a blast furnace is typically preheated using a stove, comprising refractory material which is heated using a burner. When the material is hot enough, combustion air is passed through the stoves to pre-heat it before injection into the blast furnace. Usually, several stoves are operated in parallel and cyclically so that at least one stove is operated for heating combustion air while the refractory material of at least one stove is heated.

Conventionally, the top gas leaving the blast furnace has a temperature of around 110-120°C and contains about 20-25% each of CO and $CO_2$. Typically, 3-5% $H_2$ and some $H_2O$ will also be present, but the other major constituent of the top gas is $N_2$ (typically 45-57%). The gas constitutes a low grade fuel, having a relatively low heating value, and is commonly used to fuel the stoves.

The top gas is normally combusted using air-fuel burners in the stoves. In order to ensure the necessary high air blast temperatures needed by the blast furnace, it is well known to enrich the top gas with a high calorific value gas, such as coke oven gas or natural gas. The combustion of such additional fuel leads to larger overall emissions of carbon dioxide from the plant, and is therefore not desirable.

It is also known to oxygen enrich the combustion air used in stack burners. Usually, the enrichment levels needed to reduce or eliminate the need for additional, high-calorific fuels are such as to result in a final oxidant oxygen content in the combustion air of around 28-30%.

WO 2010/133476 A1 proposes a method for operating a hot blast stove comprising a heating cycle and a blowing cycle. The heating cycle comprises the steps of feeding a first stream of fuel to the burner, feeding a second stream of fuel to a pre-combustion chamber, feeding oxygen to the pre-combustion chamber and allowing the second stream of fuel and the oxygen to interact so as to form an oxidizing gas which is fed to the burner.

WO 2011/065907 A1 discloses a method for heating a blast furnace stove by combusting a fuel with a lower heating value of 9 MJ/NM$^3$ or less with an oxidant comprising at least 85% oxygen and to recirculate the combustion gases into the combustion zone.

Such methods may in some cases render peak flame temperatures high enough to damage the refractory material of the stove.

The blast furnace itself is a highly efficient counter-current reactor that has evolved over many years. It is approaching the limits of thermodynamic efficiency. Moreover, the blast furnace and its ancillary equipment, such as stoves, are the largest energy consumers in an integrated iron and steel works. Furthermore, the energy consumed in iron making is the dominant factor determining the carbon consumption of the integrated steel making process, and therefore the emissions of carbon dioxide. Therefore, it would be desirable to increase thermal efficiency of blast furnace stoves.

In addition to the problem of high peak temperatures mentioned above, too low flame temperatures or heat input rates will lead to long heating cycles, which is undesirable. In other words, the flame temperature needs to be moderated.

SUMMARY OF THE INVENTION

The present embodiments of the invention solve the above described problems and make it possible to achieve other advantages as will be described below.

Thus, the present embodiments of the invention relate to a method according to claim 1. Preferred features of this method are set out in claims 2 to 15.

BRIEF DESCRIPTION OF THE DRAWINGS

In the following, the invention will be described in detail, with reference to exemplifying embodiments of the invention and to the appended drawings, in which:

Figure 1 is a simplified illustration of a blast furnace and three stoves in a conventional iron works;

Figure 2 is a section view illustrating a conventional stove of a modern type with external combustion chamber;

Figure 3 is a section view of a stove with additional lances according to the present embodiments;

Figure 4 is a detail section view of a stove with an oxyfuel burner according to the present embodiments;

Figure 5 is a section view of a stove with combustion gas recycling according to a comparative example;

Figure 6 is a detail section view of a stove with an ejector lance according to the present embodiments;

Figure 7 is a graph illustrating the axial temperature profile for combustion in the combustion chamber of a burner stove (a) operated conventionally with air supporting combustion and without recirculation of the flue gas and (b) operated in accordance with the embodiments;

Figure 8 is a graph similar to Figure 7, but showing the axial velocity profile for the same two combustion cases; and

Figure 9 is a graph similar to Figure 7 but showing the axial carbon monoxide concentration profile for the same two combustion cases.

DETAILED DESCRIPTION

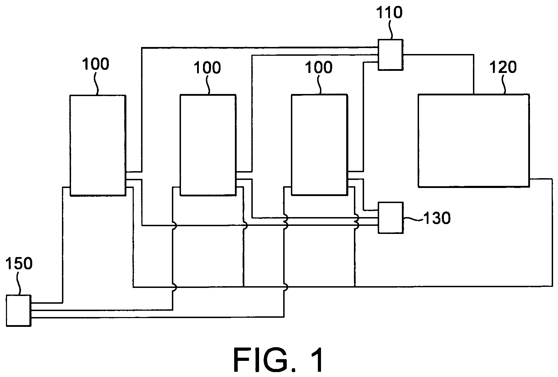

Figure 1 illustrates the principal arrangement of a blast furnace 120 and three stoves 100 in an iron works. The operation of the blast furnace 120 produces blast furnace top gas, which is fed, using a fuel supply control device 110, to each stove 100 to be used as fuel to heat the stove 100 in question. The top gas is combusted with an oxidant in the form of air, which is supplied by an air supply control device 130.

Each stove 100 comprises refractory material in the form of ceramic bricks or the like, which is first heated and then used to heat blast air which is fed into the blast furnace.

When operated in refractory material heating mode ("on gas" mode), the top gas is combusted in the stove 100 with the oxidant, and the combustion gases are fed to a flue gas treatment device 150, possibly including a conventional carbon capture step.

When operated in blast air heating mode ("on blast" mode), air is led through the refractory material in the opposite direction, and then on to the blast furnace 120.

The stoves 100 are operated cyclically, so that at any point in time at least one stove is operated on blast and the rest of the stoves are operated on gas.

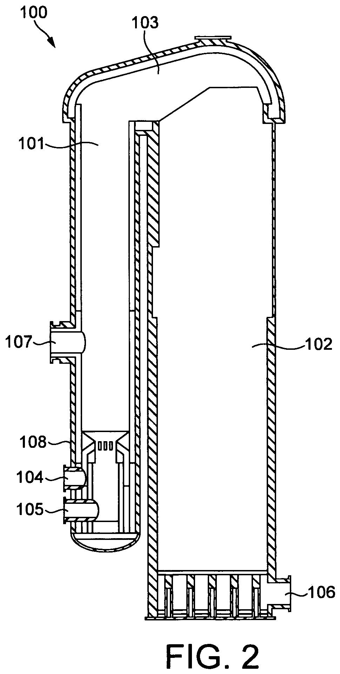

Figure 2 is a section view through a conventional stove 100 of a modern type. The stove 100 comprises an external combustion chamber 101, refractory material 102 and a dome 103. When operated on gas, it is critical that the temperature in the dome 103 does not become too high, since there is then a risk of damage to the stove 100. It is to be understood that there are also stoves with internal combustion chambers, and that the present invention is equally applicable to the operation of such stoves.

When operated on gas, top gas and air is fed into a combustion zone of the combustion chamber 101, in which combustion takes place, via an air burner 108. The burner 108 comprises a fuel inlet 105 and an air inlet 104. The hot combustion gases then stream up through the chamber 101, past the dome 103 and down through the refractory material 102, thereby heating the latter. When exiting through the port 106, the temperature of the combustion gases is conventionally about 200-350°C.

When the refractory material has reached a predetermined temperature, the operation is switched to on blast operation. Then, air is introduced through the port 106, streams through the hot refractory material 102, via the dome 103 and the combustion chamber 101, and out through an outlet port 107. At this point, the blast air has a typical temperature of 1100-1200°C.

It is preferred, in the context of the present invention, to heat the stove with blast furnace top gas, as described above. It is furthermore preferred to use top gas from a blast furnace to which blast air is provided from the stove. This allows for the arrangement of the stove near the blast furnace, is energy efficient and leads to low total emissions from the plant.

However, it is to be understood that the present invention can be equally advantageously applied to stoves heated with other low-grade fuels. By way of example, typical chemical compositions (percentage values) and lower heating values (LHV) are provided in Tables I and II, respectively, for blast furnace top gas and converter off-gas.

**Table 1**

|  | $N_2$ | $O_2$ | $H_2$ | CO | $CO_2$ | $CH_4$ | $C_mH_n$ | $H_2O$ |
|---|---|---|---|---|---|---|---|---|
| Top gas | 52.5 | 0.55 | 2.3 | 23.5 | 20 | - | - | 1.15 |
| Off-gas | 17.2 | 0.1 | 2.5 | 64.5 | 15.6 | - | - | 0.1 |

Table 2

| | LHV (MJ/Nm$^3$) | LHV (MJ/kg) |
|---|---|---|
| Top gas | 3.2 | 2.4 |
| Off-gas | 6.3 | 8.4 |

According to the present invention, the stove is heated with a gaseous fuel the LHV value of which is not higher than 9 MJ/Nm$^3$. Use of such low-grade fuel will draw maximum benefit from the possible cost benefits of the present invention. The fuel may comprise a certain addition of another, more high-grade fuel, as long as the LHV value of the mixture is equal to or less than 9 MJ/Nm$^3$. In order to minimize cost and emissions, it is however preferred not to add high grade fuels prior to combustion.

According to the present invention, such a low-grade fuel is used for heating the stove by combusting it, not with air or slightly oxygen-enriched air, but with an oxidant comprising at least 85% by weight, preferably at least 95% by weight, oxygen, where the oxidant most preferably is industrially pure oxygen having an oxygen content of essentially 100%.

This will increase fuel efficiency, since the nitrogen ballast present in air does not need to be heated. Moreover, by reducing the nitrogen ballast in the combustion products, the necessary flame temperatures can be attained without the need to supplement the low-grade fuel gas with high calorific fuels. The reduced energy demand will facilitate increased power generation and/or lead to a reduced need for import gas, thus improving fuel management.

Normally, using an oxidant with such large oxygen contents would lead to peak temperatures high enough to damage the dome and refractory material of the stove.

However, it is possible to use this type of oxidant under condition that the stove combustion gases are recirculated into the combustion zone to such extent that the mixture of fuel and oxidant therein is diluted sufficiently for the combustion in the combustion region to form a stable, visible flame at temperatures that do not damage the dome and the refractory material.

That "combustion gases are recirculated into the combustion region" herein refers to combustion gases located outside of the combustion region being recirculated back into the combustion region. Such combustion gases may originally be located inside the combustion chamber itself, but outside of the part of the combustion chamber occupied by the region in which combustion mainly takes place (the "combustion region"). Thus, in this case combustion gases are in fact recirculated within the combustion chamber. Alternatively, such combustion gases may be recirculated from outside of the combustion chamber back to the combustion region.

As will be described in further detail in the following, the dilution of the reactants may be achieved either by creating heavy turbulence inside the combustion chamber using high-velocity lancing of oxidant, possibly using a staged combustion scheme.

In accordance with the invention, it is possible to achieve sufficiently low peak flame temperatures so as not to damage the refactory material of the stove.

Additionally, when a high-oxygen oxidant is used to combust low-grade fuels such as blast furnace top gas, the $CO_2$ contents of the combustion gases become considerably higher as compared to when using air or slightly oxygen-enriched air as the oxidant. Since conventional carbon capture techniques tend to be considerably cheaper per unit captured $CO_2$ when the treated gas contains a larger share of carbon dioxide, this leads to considerable cost savings when using such a carbon capture step to treat the stove combustion gases.

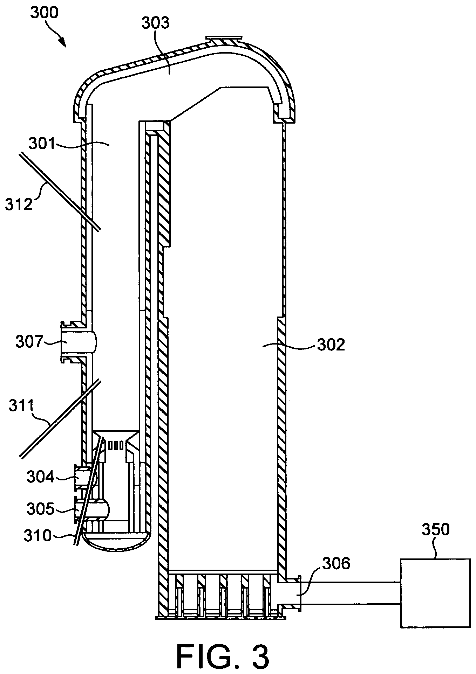

Figure 3 shows a preferred embodiment of the invention. A stove 300, which is similar to the conventional one 200 shown in Figure 2, comprises a combustion chamber 301, refractory material 302, a dome 303, an inlet 304 used for combustion air when the stove is operated in a conventional manner with air combustion, another inlet 305 used for low-grade fuel such as top gas, and ports 306, 307 similar to ports 206, 207. Instead of combusting the low-grade fuel with air, one or several lances 310, 311, 312 are inserted into the combustion chamber, and are used to supply the above defined high-oxygen oxidant into the combustion zone. The oxidant may be provided by local oxygen production or using an externally provided oxidant.

In all embodiments described herein, the total amount of oxidant per time unit is balanced against the amount of supplied low-grade fuel, so as to create the desired combustion conditions in terms of stoichiometry.

It is preferred that each lance 310, 311, 312 supplies oxidant to the combustion zone at high velocity, preferably at least 200 m/s, more preferably at least sonic velocity. Such high-velocity lancing leads to heavy turbulence in the combustion chamber, in turn entraining combustion gases into the combustion zone and thereby diluting the flame so as to render it diffuse with a peak temperature that does not damage the refractory material of the stove.

According to one preferred embodiment, a lance 310 is arranged with its orifice in close proximity to the orifice of the fuel inlet 305. According to another preferred embodiment, a lance 311 is arranged at a position at a distance from the orifice of the fuel inlet 305. Depending on the geometry of the combustion chamber 301, one of these arrangements, or a combination of both, may provide the best recirculation of combustion gases into the combustion zone. A supplementary lance 312, arranged further downstream in relation to the other lance or lance 310, 311, can be used to provide a staged combustion process, whereby the total flame volume can be made even larger. Naturally, more than one lance of each of the described types 310, 311, 312 may be arranged to complement each other. In case the oxidant is lanced in close proximity to the fuel inlet 305, it is preferred to also lance oxidant further downstream so as to create a staged combustion process.

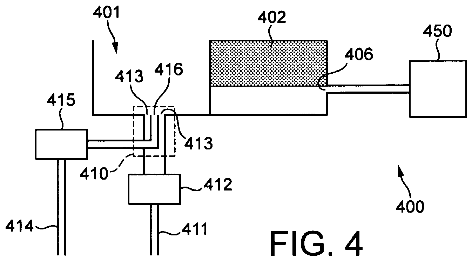

Figure 4 is an overview illustration of another preferred embodiment, in which a blast furnace stove 400 comprises a combustion chamber 401, refractory material 402 and a port 406.

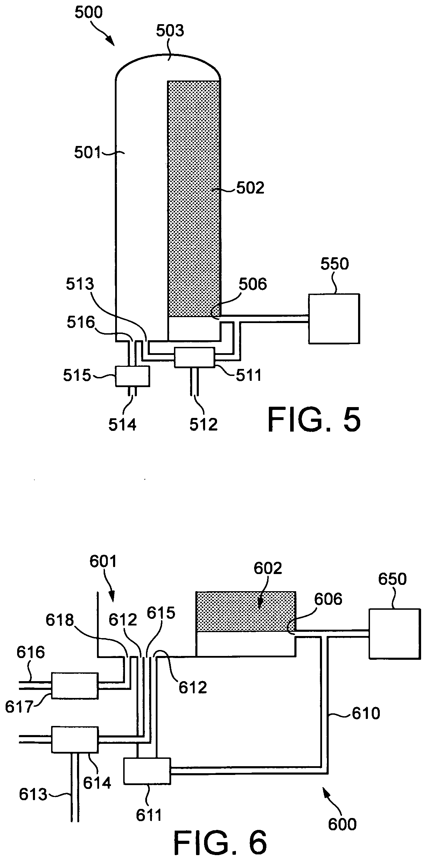

Low grade fuel is supplied via a supply conduit 411, a supply device 412 and an inlet 413. Oxidant is supplied via a supply conduit 414, a supply device 415 and a lance comprising an orifice 416. The lance is arranged so that its orifice 416 is arranged adjacent to the fuel inlet 413. Preferably, the lance runs coaxially to the fuel inlet 413, as depicted in Figure 6. By such an adjacent arrangement, especially when coaxial, and when the oxidant is lanced at the above described high velocities, the fuel is efficiently entrained into the combustion zone by ejector action on the part of the high velocity oxidant. As a result, heavy recirculation of combustion products is achieved in the combustion chamber 401, in particular recirculating combustion gases into the combustion zone expanding the flame front. When such a high-velocity lance is arranged adjacent to the fuel inlet 413, it is preferred to simultaneously use a secondary oxidant lance 312, providing part of the totally supplied oxygen at another location in the combustion chamber 401 downstream of the fuel inlet 413, creating a staged combustion of the low-grade fuel and thereby facilitating the achievement of a flame which is diffuse and which does not have a peak temperature sufficiently high to damage the refactory material of the stove.

The stove 400 can be part of a standing iron making plant and adapted to operate in accordance with the invention from a conventional mode of operation in which air is used to support combustion of the blast furnace gas, in which the blast furnace gas is supplemented by a coke oven gas or natural gas and in which there is no recirculation of the combustion products with the stove 400.

According to a preferred embodiment, an existing, conventional, air burner, which was used to heat the existing stove 400 previously, is in an initial step replaced by an oxyfuel burner 410 comprising the above described fuel inlet 413 and oxidant lance. An "oxyfuel" burner herein refers to a burner driven with a fuel and an oxidant, wherein the oxidant comprises a large part oxygen, preferably at least 85% oxygen, more preferably at least 95% oxygen.

According to an alternative, preferred embodiment, the existing air burner described above is, in an initial step, supplemented with one or several high-velocity oxidant lances as described above, and the air supply is terminated.

As described above, such high velocity lancing yields heavy turbulence inside the combustion chamber 301, 401, leading to sufficiently low peak flame temperatures for the refactory materials in the stove not to be damaged.

However, the mass flow rate of the combustion gases will be lower when using a high-oxygen oxidant as compared to when using air as the oxidant. This would lead to smaller convective heat transfer to the refractory material and hence longer heating cycle times. Therefore, when converting an existing stove for high-oxygen oxidant operation, flue gases are recycled from the stove back into the combustion zone as described below in connection to Figures 5 and 6.

Thus, Figure 5 is an overview illustration of a stove 500 according to a comparative example, comprising a combustion chamber 501, refractory material (sometimes referred to as "checker work") 502 and a dome 503.

During on gas operation, the combustion gases leave the stove 500 through a port 506. However, part of the combustion gases are recycled back to the combustion region in the combustion chamber 501 via a recycling device 511. The feedback device 511 may include a propelling device, such as a fan, to feed the recycled combustion gas to the combustion chamber 501.

The recycling device 511 is also arranged to mix the recycled combustion gas with a high-oxygen oxidant of a composition as described above, provided via a supply conduit 512. The mixing may take place using conventional diffusers. The mixture of recycled combustion gas and oxidant is then supplied to the combustion chamber 501 via an inlet 513. A low-grade fuel, such as top gas from the blast furnace, is provided, via a supply conduit 514, a supply device 515 and an inlet 516. In the combustion zone, the fuel is hence combusted with the oxidant in the presence of the combustion gases that have been recycled into the combustion zone after they have already past the stove 500. This way, the flame in the combustion chamber 501 is diluted.

Using flue gas recycling, it is possible to reach convective heat transfer rates high enough so as to be able to maintain the heating cycle time of an existing stove in which a method according to the present invention is applied. This is achieved by recycling a sufficient amount of combustion gases to maintain the gas mass or thermal energy flow per time unit through the stove 500, at a level which is at least the same as the gas mass or thermal energy flow per time unit which was used when the existing stove was operated, prior to conversion to operation according to the present invention, using a low-oxygen oxidant with no recycling.

As previously mentioned, the method according to the invention replaces air combustion of a calorifically enriched low calorific value fuel gas with oxy-fuel combustion, in which the flame is diluted by recirculating flue gas, by example by high impulse mixing of the combustion space using lances for the injection of the oxidant. The need for a high cost high calorific value booster fuel gas is eliminated and the stove is fuelled using blast furnace gas alone. The stoves typically account for around 10% of the total energy demand for integrated steel-making and some 18% of the energy delivered to the stoves is lost in the flue gas. Recycling flue gas reduces this energy loss and lowers the amount of energy that must be supplied to the stove from combustion of a fuel gas. The method according to the invention therefore combines some of the benefits of waste heat recovery with those of oxy-fuel combustion.

Consider a hypothetical example of a 1500 $m^3$ working volume blast furnace operating with a productivity of about 2.2 t/m$^3$/d. Such a furnace would produce some 138 tonnes of hot metal per hour and based on typical blast volumes, might be expected to consume 138,000 Nm3/h of hot blast. To achieve a hot blast temperature of 1200 °C would require a stove burner flame temperature about 150 °C higher and some 230 GJ/h would be required to heat the air to this temperature. For a stove efficiency of around 80% this means the energy input to the stoves would be around 290GJ/h or 145GJ/h for each stove assuming two stoves are 'on-gas' simultaneously. It is well established that for normal stove operating conditions, about 18% of the energy input to the stoves exits in the flue gas. It has been estimated that for the conditions considered this would result in a flue gas temperature of around 250 °C.

These conditions have been used to establish hypothetical heat and mass balances for 3 modes of operation, "air-fuel" (i.e. conventional operation without flue gas recirculation; "oxygen-enriched" (i.e. as "air-fuel", but with the air enriched in oxygen) and "flue gas recycle" (i.e. in accordance with the method of the invention). The calculations have been done to ensure a constant flame temperature and constant mass flow of combustion products, so that conditions for convective heat transfer are maintained. Flame stoichiometry has, in each case, been adjusted to ensure 1% excess oxygen in the flue gas. The results are compared in Table 3.

Table 3

| | BFG Nm3/h | COG Nm3/h | Air Nm3/h | Oxygen Nm3/h | Flue Recycle Nm3/h | Heat of Combustion GJ/h | Flame Temp. °C | Flue Mass Flow kg/min | Flue Gas %$O_2$ | Flue Gas %$CO_2$ |
|---|---|---|---|---|---|---|---|---|---|---|
| Air-Fuel | 34000 | 2400 | 34200 | 0 | 0 | 145 | 1347 | 1539 | 1 | 23 |
| Oxygen Enriched | 40200 | 1200 | 26800 | 1300 | 0 | 145 | 1347 | 1545 | 1 | 27 |
| Flue Gas Recycle | 44700 | 0 | 0 | 6220 | 14490 | 139 | 1347 | 1541 | 1 | 41 |

It can be seen that for the conditions considered, oxygen enrichment of the air supplied to the stoves reduces, but does not eliminate, the amount of coke oven gas employed. Blast furnace gas flow is increased to ensure the heat input of 145 GJ/h is maintained. The $CO_2$ content of the flue gas increases marginally due to the elimination of some nitrogen from the system.

The introduction of flue gas recirculation removes the need for calorific enrichment of the fuel gas. This is because a further modest increase in the flow of blast furnace gas, combined with the recovery of the sensible heat contained in the flue gas, is sufficient to enable the desired flame temperature to be reached. It is to be understood that with flue gas recirculation, the oxidant is not air but a gas mixture containing at least 85% by volume of oxygen or essentially pure oxygen. (The calculated results shown in Table 3 are based on the latter). The energy input from combustion is decreased by about 4% due to recovery of energy from the recycled flue gas.

Air is eliminated and combustion is sustained by the use of industrial oxygen. Importantly it can be seen that the $CO_2$ content of the flue gas has increased from the initial 23% to 41%. This equates to 50 tonnes of $CO_2$ per hour for a single stove or 100 tonnes for the two stoves 'on-gas'. 75 tonnes of this would be available for carbon capture and sequestration whilst the remainder is recycled.

For the hypothetical case under consideration it is reasonable to assume that the 138 tonnes of hot metal produced each hour is converted to 150 tonnes of slab or other metal product which accounts for the likelihood of scrap additions during steel-making.

Applying industry benchmark figures, it can be estimated that the entire integrated steel plant would generate about 280 tonnes of $CO_2$ per hour. Hence, for the example considered, recycling flue gas to the stoves (assumed to be Cowper stoves) makes some 27% of the plant-wide $CO_2$ emissions available for carbon capture.

Whilst simple heat and mass balances, such as those detailed in Table 1, serve to illustrate the main advantages achievable by the method according to the invention, they do not completely reflect the benefits. In particular, they do not take account of the improved heat transfer conditions generated on switching from air-fuel to oxy-fuel combustion. For this purpose a dynamic model that accounts for changes to the overall heat transfer coefficient as a function of composition, temperature and mass flow in the refactory checker work can be used. A number of modelling studies of hot blast stoves, have shown that the heat transfer taking place can be accurately represented by an overall or 'lumped' heat transfer coefficient that combines the effects of convection and radiation. So that for the gassing cycle

$$\alpha = \alpha_c + \alpha_r$$

Where;

$\alpha_c$ = convective heat transfer coefficient, and;
$\alpha_r$ = radiative heat transfer coefficient

The convective heat transfer coefficient is related to the mass flow rate and may be calculated from the Sieder-Tate or Hausen equations. The radiant heat transfer coefficient is derived from the Stefan-Boltzmann law which can be expressed in the form;

$$h_r = 1.713 \times 10^{-8} \left[ \frac{\varepsilon_g . T_g^{\,4} - \alpha_g . T_B^{\,4}}{T_g - T_B} \right]$$

Where;

$\varepsilon_g$ = emissivity of the gas which is a function of composition and temperature and may be derived from grey gas models or from Hottel charts.
$\alpha_g$ = absorptivity of the gas
$T_g$ = gas temperature.
$T_B$ = mean temperature of local checker work.

A zonal model that incorporates such principles and accounts for heat transfer to and within the checkers (refactory) has been used to make a more detailed assessment of the benefits. The baseline for comparison is operational data from a set of modern Cowper stoves generating an industry benchmark hot-blast temperature of 1250°C. The results are shown in Table 4.

Table 4

|  |  | Conventional Operations | Oxygen Case 1 | Oxygen Case2 | Oxygen Case 3 |
|---|---|---|---|---|---|
| Blast Cycle |  | 30 | 30 | 25 | 25 |
| Gas Cycle (8 minute change) |  | 52 | 52 | 42 | 42 |
| BFG | Nm3/h | 91,237 | 133,742 | 134,636 | 147,292 |
| BFG HV | MJ/Nm3 | 3.1 | 3.1 | 3.1 | 3.1 |
| Natural Gas | Nm3/h | 4,893 | 1,224 | 1,262 | 1,296 |
| NG HV | MJ/Nm3 | 33.9 | 33.9 | 33.9 | 33.9 |
| Oxygen Rate - per stove | Nm3/h | 0.00 | 23,665 | 21,854 | 23,665 |
| Total Heat      per Input      stove | MJ/h | 448,707 | 456,094 | 460,153 | 500,540 |
|       per stove | MJ/cycle | 388,879 | 395,281 | 322,107 | 350,378 |
|    total - 3 stove operation | MJ/h | 777,759 | 790,563 | 773,058 | 840,907 |
| Wind Rate | Nm3/h | 427,210 | 427,210 | 427,210 | 427,210 |
| Cold Blast | °C | 200 | 200 | 200 | 200 |
| Hot Blast | °C | 1248 | 1246 | 1248 | 1261 |
| Dome Temperature | °C | 1385 | 1385 | 1383 | 1384 |
| Final Stack Temperature | °C | 399 | 399 | 375 | 399 |
| Projected Annual Cost Saving € |  | NA | 1,554,375 | 2,660,237 | 4,611,263 |
| Stove Flue Gas Volume | Nm3/h | 205,875 | 196,076 | 201,981 | 207,466 |
|  | $CO_2$ | 23.05% | 45.43% | 45.43% | 45.43% |
|  | Nm3/h - $CO_2$ | 47,454 | 89,077 | 91,760 | 94,189 |

It is interesting to compare these cases in a little more detail:

The conventional operations show that the stove uses a significant level of natural gas enrichment to generate a high blast temperature of 1248°C.

All three examples ("Oxygen Cases" 1, 2 and 3) are in accordance with the inventors. In 'Oxygen Case 1' the model has been run retaining the same blast temperature, blast volume, and stack temperature as in the conventional operations. This case generates comparable results to a steady state heat balance because although radiation heat transfer to the (refractory) checker bricks has improved, the benefit of this is disguised by forcing the model to retain a constant stack temperature. In fact, since the heat capacity of the $CO_2$ contained in the recycled flue gas, is higher than that of the nitrogen it is replacing, the overall impact is that slightly more energy is needed to maintain a constant dome (and blast) temperature. Nevertheless, replacing expensive natural gas with a cheaper fuel source is sufficient to compensate for both the higher energy input and the cost of the oxygen consumed. It is worth pointing out that the overall heat transfer coefficients calculated by the model show a 13.5 % increase relative to air fuel combustion near the top of the checkers, but even at the lower temperatures towards the base of the checkers the overall heat transfer coefficient had increased by some 8.5%.

In 'Oxygen Case 2' the enhanced heat transfer conditions have been accounted for by allowing the stack gas temperature to re-equilibrate to a lower temperature. It can be seen that since more heat is retained in the checkers, the stack temperature drops by some 25 °C. The net effect is that it is possible to lower gassing cycle time whilst retaining the same blast temperature. The total energy input for a 3 stove operation is marginally reduced but blast temperature and volume is maintained even at a lower stack gas volume. This is an important feature that could be exploited under plugged stove conditions.

In 'Oxygen Case 3' the reduction in stack gas temperature by increasing the firing rate until the original stack gas temperature has been exploited by increasing the firing rate until the original stack gas temperature has been restored. It is apparent that the firing rate can be increased by almost 10%. This is enough to increase the blast temperature by some 13 °C, enough to result in significant coke savings at the blast furnace.

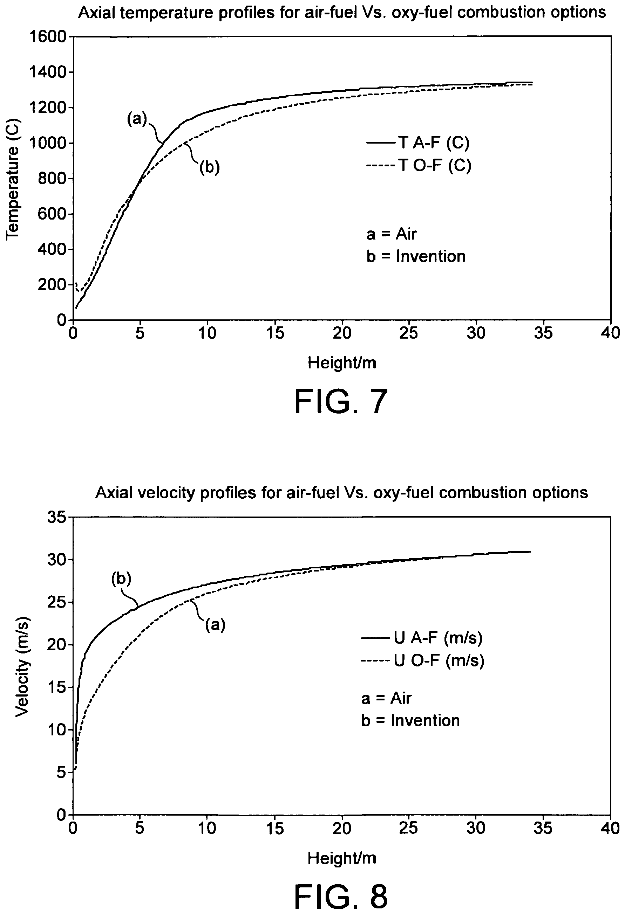

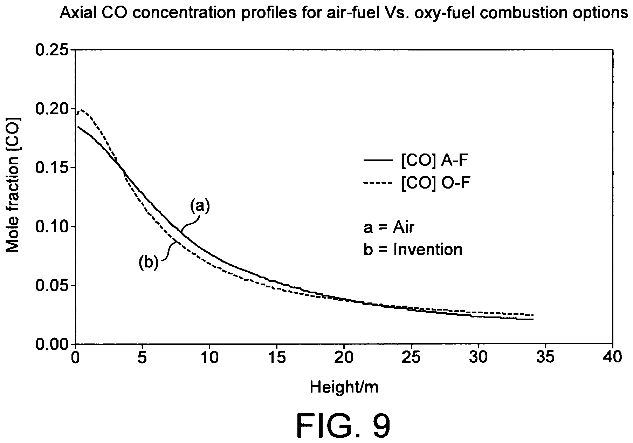

Computational fluid dynamic (CFD) modelling has been used alongside the dynamic heat balance, to develop a detailed understanding of temporal and spatial variations of temperature, velocity and concentration that occur during a complete stove cycle. Some relevant CFD results are presented in Figures 7 to 9. These show that the method according to the invention can be performed to such similar flame profiles to those achieved in conventional operation of the blast furnace stove with air as the oxidant and without recirculation of the flue gas. It can therefore be inferred that the method according to the invention can be operated with a stable, visible flame or flames and without generating peak flame temperatures likely to damage the stove refractory or checker work.

Referring now to Figure 5 enough combustion gases are recycled to essentially maintain or increase the gas mass flow per time unit through the refractory material.

According to an alternative preferred embodiment, enough combustion gases are recycled to essentially maintain or increase the thermal energy throughput through the refractory material. This takes into consideration the different heat capacities for various inert components in the combustion gases. In this case, it is also preferred that enough combustion gases are recycled so that the flame temperature is essentially maintained or decreased.

As is also shown in Table 3, the $CO_2$ contents of the flue gases vented from the stove 500 are much higher - 41 % as compared to 23% in the conventional operation mode. The costs per unit weight captured $CO_2$ for conventional carbon capture techniques is significantly decreased as the $CO_2$ concentration increases from low levels up to a level of roughly 50-60%. Concentrations increased beyond this limit will provide smaller gains. As a result, the costs for a carbon capture step for treating the stove flue gases may be reduced significantly per unit weight captured $CO_2$ when a high-oxygen oxidant is used in accordance with the present invention.

According to a preferred embodiment, an existing, conventional, air burner, which was used to heat the existing stove 500 previously, is in an initial step replaced by a fuel inlet 516 and an inlet for recycled combustion gases 513, and the fuel is then combusted with the above described high oxygen oxidant. To this end, it is preferred that the oxidant is submitted by premixing with the recycled combustion gases. Such premixing is combined with one or several lances as described above.

Figure 6 is an overview illustration of another preferred embodiment of the present invention, showing a blast furnace stove 600 with a combustion chamber 601, refractory material 602, a port 606, a conduit for recycled combustion gases 610, a recycle device 611, a fuel supply conduit 616, a fuel supply device 617 and a fuel inlet 618.

Oxidant is supplied via an oxidant supply conduit 613 and an oxidant supply device 614 to an oxidant lance arranged so that the orifice 615 of the lance is arranged adjacent to an orifice 612 for supply of recycled combustion gases, supplied from the recycle device 611. Preferably, the oxidant lance runs coaxially with the recycled combustion gas inlet 612. In a way which is similar to the function of the coaxial lance orifice 416 as described in connection to Figure 4, such an adjacent arrangement, especially when coaxial, will efficiently entrain the recycled combustion gases into the combustion zone by ejector action on the part of the high velocity oxidant, creating more combustion gas recirculation in the combustion chamber 601. At the same time, there is no need for a separate propelling device in the recycling device 611, since the recycled combustion gases will be propelled by the ejector action at the orifice 615.

The embodiment shown in Figure 6 is advantageously combined with an additional oxidant lance, providing additional oxidant at a location in the combustion zone located at a distance from the orifice 615, thereby achieving a staged combustion in the combustion zone.

As indicated above, it is furthermore preferred that the stove 300, 400, 600 is connected to a respective carbon capture step 350, 450, 650, which may be conventional *per se*, separating the carbon dioxide contents of the combustion gases vented from the stove before the combustion gases are released into the environment.

When the age of a blast furnace stove approaches its expected useful life, it is preferred to apply one of the herein described embodiments, or a combination of several of them, to the stove.

This way, the useful life of the stove may be prolonged, operating it with lower flame temperatures, with maintained production rates in terms of blast air, better fuel economy and lower emissions.

Thus, a method according to the present invention will allow a blast furnace stove to be operated only on a low grade fuel such as blast furnace top gas, with no need for higher calorific value fuel enrichment and no risk for temperature-induced stove damage, while producing flue gases that are better suited for carbon capture. In addition, it allows the useful life of a stove to be prolonged.

If sufficient recycling of combustion gases is used, it is also possible to achieve the same amount and quality of blast air in an existing stove which is converted, according to what has been described above, for operation with a high-oxygen oxidant, and which stove is provided with the combustion gas recycling arrangement described in connection to Figure 6.

Above, preferred embodiments have been described. However, it is apparent to the skilled person that many modifications may be made to the described embodiments without departing from the present invention.

For example, any one of the methods for creating recirculation of combustion gases as described in connection to Figures 4 to 6 may advantageously be supplemented with one or several of the various oxidant lances as described in connection to Figure 3.

Moreover, the ejector-propelled recirculated combustion gases method as described in connection to Figure 6 may advantageously be premixed with a certain amount of high-oxygen oxidant in a way similar to the one described in connection to Figure 5.

Also, the ejector-propelling of pre-mixed or non-pre-mixed recycled combustion gases as described in connection to Figure 6 may advantageously be combined with ejector-propelling of low-grade fuel as described in connection to Figure 4.

Heat may be recovered from combustion gases that are not recycled. Additionally or alternatively, the combustion gas may be subjected to carbon capture.

The method according to the invention may be applied to Kalugin blast furnace stoves as an alternative to the stores illustrated in the drawings.

Further, all embodiments disclosed are not necessarily in the alternative, as various embodiments of the invention may be combined to provide the desired result.

## Claims

1.  A method for heating a blast furnace stove (300,400, 600) by combusting a fuel with a lower heating value (LHV) of 9 MJ/Nm$^3$ or less in a combustion region in which there is maintained a visible flame, arranged in a combustion chamber (301;401; 601) in the stove, and causing the combustion gases to flow through and thereby heat refractory material (302,402, 602) in the stove, wherein the fuel is combusted with an oxidant comprising at least 85% oxygen, wherein the oxidant is supplied to the combustion zone at high velocity through a lance (310,311,312, 416, 615), and wherein combustion gases are caused to be recirculated into the combustion region thereby diluting the mixture of fuel and oxidant therein sufficiently for the flame not to damage the refactory material.

2.  A method according to claim 1, wherein combustion gases are recirculated from a location inside the combustion chamber (301;401) itself, but outside of the part of the combustion chamber occupied by the combustion region.

3.  A method according to claim 2, wherein the oxidant is lanced at a velocity of at least 200 m/s.

4.  A method according to claim 2 or claim 3, wherein the oxidant is lanced at least at sonic velocity.

5.  A method according to any one of claims 2 to 4, wherein the lance has an orifice adjacent to a supply inlet for fuel (413), thereby entraining such fuel into the combustion region by ejector action.

6.  A method according to any one of the preceding claims, wherein the combustion is staged.

7.  A method according to any one of the preceding claims, wherein as a preliminary step an existing stove is refitted to perform the method, the refitting includes providing an existing burner in one or several high-velocity oxidant lances injecting said oxidant to supplement an existing burner, the existing burner being placed in communication with the recirculated combustion gases.

8.  A method according to any one of the preceding claims, wherein combustion gases that have flowed through the refractory material (602) are caused to be recycled back into the combustion region.

9.  A method according to claim 8, wherein the recycled combustion gases are premixed with said oxidant before entering the combustion region.

10.  A method according to claim 8 or claim 9, wherein enough combustion gases are recycled so that the total oxygen percentage by volume of the inert part of the atmosphere in the combustion chamber (601), not counting the non-inert fuel components, is equal to or less than 12%.

11.  A method according to any one of claims 1 to 6 wherein an existing stove is as a preliminary step adjusted to perform said method by replacing an existing air burner with a fuel inlet and an inlet for recycled combustion gases , and that the fuel is then combusted with said oxidant.

12. A method according to claim 11, wherein enough combustion gases are recycled to maintain the gas mass flow per time unit through the refractory material (602) at a level which is at least the same as the gas mass flow per time unit which was used when the existing air burner was operated without recycling.

13. A method according to any one of the preceding claims, wherein the fuel is blast furnace top gas.

14. A method according to claim 13, wherein the blast furnace top gas is taken from a blast furnace which is supplied with hot air by the stove (300,400, 600).

15. A method according to any one of the preceding claims, wherein the flame temperature is maintained below 1400°C or 1350°C.


**Patentansprüche**

1. Verfahren zum Erhitzen eines Hochofen-Winderhitzers (300, 400, 600) durch Verbrennen eines Brennstoffs mit einem niedrigen Heizwert (LHV) von 9 MJ/Nm$^3$ oder weniger in einem Verbrennungsbereich, in dem eine sichtbare Flamme unterhalten wird, die in einer Brennkammer (301; 401; 601) in dem Winderhitzer angeordnet ist, und Bewirken, dass die Verbrennungsgase hindurchfließen und dadurch das feuerfeste Material (302, 402, 602) in dem Winderhitzer erhitzen, wobei der Brennstoff mit einem Oxidationsmittel verbrannt wird, das wenigstens 85 % Sauerstoff enthält, das Oxidationsmittel der Verbrennungszone mit hoher Geschwindigkeit durch ein Strahlrohr (310, 311, 312, 416, 615) zugeführt wird, und wobei bewirkt wird, dass Verbrennungsgase in den Verbrennungsbereich rückgeführt werden, wobei dadurch das Gemisch von Brennstoff und Oxidationsmittel darin ausreichend verdünnt wird, damit die Flamme das feuerfeste Material nicht beschädigt.

2. Verfahren gemäß Anspruch 1, wobei Verbrennungsgase von einem Ort innerhalb der Brennkammer (301; 401) selbst aber außerhalb des Teils der Brennkammer, der von dem Verbrennungsbereich eingenommen wird, rückgeführt werden.

3. Verfahren gemäß Anspruch 2, wobei das Oxidationsmittel mit einer Geschwindigkeit von wenigstens 200 m/s eingeblasen wird.

4. Verfahren gemäß Anspruch 2 oder Anspruch 3, wobei das Oxidationsmittel wenigstens mit Schallgeschwindigkeit eingeblasen wird.

5. Verfahren gemäß einem der Ansprüche 2 bis 4, wobei das Strahlrohr eine Öffnung benachbart zu einem Zufuhreinlass für Brennstoff (413) aufweist, so dass der Brennstoff durch Strahlwirkung in den Verbrennungsbereich mitgerissen wird.

6. Verfahren gemäß einem der vorstehenden Ansprüche, wobei die Verbrennung stufenweise erfolgt.

7. Verfahren gemäß einem der vorstehenden Ansprüche, wobei als ein Anfangsschritt ein bestehender Winderhitzer nachgerüstet wird, um das Verfahren durchzuführen, wobei das Nachrüsten das Bereitstellen eines bestehenden Brenners in einem oder mehreren Hochgeschwindigkeits-Oxidationsmittelstrahlrohren, die das Oxidationsmittel einblasen, umfasst, um einen bestehenden Brenner zu ergänzen, wobei der bestehende Brenner in Kommunikation mit den rückgeführten Verbrennungsgasen steht.

8. Verfahren gemäß einem der vorstehenden Ansprüche, wobei bewirkt wird, dass Verbrennungsgase, die durch das feuerfeste Material (602) geströmt sind, in den Verbrennungbereich rückgeführt werden.

9. Verfahren gemäß Anspruch 8, wobei die rückgeführten Verbrennungsgase mit dem Oxidationsmittel vorgemischt werden, bevor sie in den Verbrennungsbereich eintreten.

10. Verfahren gemäß Anspruch 8 oder Anspruch 9, wobei ausreichend Verbrennungsgase rückgeführt werden, so dass der Gesamt-Sauerstoffanteil bezogen auf das Volumen des inerten Teils der Atmosphäre in der Brennkammer (601), bei dem die nichtinerten Brennstoffkomponenten nicht mitgezählt werden, gleich oder kleiner als 12 % ist.

11. Verfahren gemäß einem der Ansprüche 1 bis 6, wobei ein bestehender Winderhitzer als ein Anfangsschritt angepasst wird, um das Verfahren durchzuführen, durch Ersetzen eines bestehenden Luftbrenners mit einem Brennstoffeinlass und einem Einlass für rückgeführte Verbrennungsgase und der Brennstoff dann mit dem Oxidationsmittel verbrannt wird.

**12.** Verfahren gemäß Anspruch 11, wobei ausreichend Verbrennungsgase rückgeführt werden, um den Gas-Massenfluss pro Zeiteinheit durch das feuerfeste Material (602) auf einem Niveau zu halten, das wenigstens gleich wie der Gas-Massenfluss pro Zeiteinheit ist, der verwendet wurde, als der bestehende Luftbrenner ohne Rückführung verwendet wurde.

**13.** Verfahren gemäß einem der vorstehenden Ansprüche, wobei der Brennstoff Hochofen-Gichtgas ist.

**14.** Verfahren gemäß Anspruch 13, wobei das Hochofen-Gichtgas aus einem Hochofen entnommen wird, der mit Heißluft aus dem Winderhitzer (300, 400, 600) versorgt wird.

**15.** Verfahren gemäß einem der vorstehenden Ansprüche, wobei die Flammentemperatur unter 1400°C oder 1350°C gehalten wird.

**Revendications**

**1.** Procédé pour chauffer un foyer de haut-fourneau (300, 400, 600) en brûlant un combustible avec un pouvoir calorifique inférieur (PCI) de 9 MJ/Nm$^3$ ou moins dans une région de combustion dans laquelle est entretenue une flamme visible, disposée dans une chambre de combustion (301 ; 401 ; 601) dans le foyer, et en amenant les gaz de combustion à circuler à travers et ainsi chauffer un matériau réfractaire (302, 402, 602) dans le foyer, le combustible étant brûlé avec un oxydant comprenant au moins 85 % d'oxygène, l'oxydant étant apporté à la zone de combustion à grande vitesse par une lance (310, 311, 312, 416, 615), et les gaz de combustion étant remis en circulation dans la région de combustion, y diluant ainsi suffisamment le mélange de combustible et d'oxydant pour que la flamme n'endommage pas le matériau réfractaire.

**2.** Procédé selon la revendication 1, dans lequel les gaz de combustion sont remis en circulation depuis un emplacement à l'intérieur de la chambre de combustion (301 ; 401) elle-même, mais à l'extérieur de la partie de la chambre de combustion occupée par la région de combustion.

**3.** Procédé selon la revendication 2, dans lequel l'oxydant est lancé à une vitesse d'au moins 200 m/s.

**4.** Procédé selon la revendication 2 ou la revendication 3, dans lequel l'oxydant est lancé au moins à la vitesse du son.

**5.** Procédé selon l'une quelconque des revendications 2 à 4, dans lequel la lance présente un orifice au voisinage d'une entrée d'alimentation en combustible (413), entraînant ainsi ce combustible dans la région de combustion par l'action d'un éjecteur.

**6.** Procédé selon l'une quelconque des revendications précédentes, dans lequel la combustion est étagée.

**7.** Procédé selon l'une quelconque des revendications précédentes, dans lequel, en tant qu'étape préliminaire, un foyer existant est converti afin de réaliser le procédé, la conversion comprenant la mise en place d'un brûleur existant dans une ou plusieurs lances d'oxydant à grande vitesse injectant ledit oxydant afin de compléter un brûleur existant, le brûleur existant étant placé en communication avec les gaz de combustion remis en circulation.

**8.** Procédé selon l'une quelconque des revendications précédentes, dans lequel les gaz de combustion qui ont circulé à travers le matériau réfractaire (602) sont recyclés dans la région de combustion.

**9.** Procédé selon la revendication 8, dans lequel les gaz de combustion recyclés sont prémélangés avec ledit oxydant avant d'entrer dans la région de combustion.

**10.** Procédé selon la revendication 8 ou la revendication 9, dans lequel suffisamment de gaz de combustion sont recyclés pour que le pourcentage volumique total d'oxygène de la partie inerte de l'atmosphère dans la chambre de combustion (601), sans compter les composants non inertes du combustible, soit égal ou inférieur à 12 %.

**11.** Procédé selon l'une quelconque des revendications 1 à 6, dans lequel un foyer existant est, en tant qu'étape préliminaire, adapté afin de réaliser ledit procédé en remplaçant un brûleur à air existant par une entrée de combustible et une entrée pour les gaz de combustion recyclés, et le combustible est alors brûlé avec ledit oxydant.

**12.** Procédé selon la revendication 11, dans lequel suffisamment de gaz de combustion sont recyclés pour maintenir le débit massique de gaz par unité de temps à travers le matériau réfractaire (602) à un niveau qui est au moins égal au débit massique de gaz par unité de temps qui était utilisé quand le brûleur à air existant fonctionnait sans recyclage.

**13.** Procédé selon l'une quelconque des revendications précédentes, dans lequel le combustible est du gaz de gueulard de haut-fourneau.

**14.** Procédé selon la revendication 13, dans lequel le gaz de gueulard de haut-fourneau est prélevé dans un haut-fourneau qui est alimenté avec de l'air chaud par le foyer (300, 400, 600).

**15.** Procédé selon l'une quelconque des revendications précédentes, dans lequel la température de flamme est maintenue à un niveau inférieur à 1400°C ou 1350°C.

FIG. 1

FIG. 2

FIG. 3

FIG. 4

FIG. 5

FIG. 6

## Axial temperature profiles for air-fuel Vs. oxy-fuel combustion options

FIG. 7

## Axial velocity profiles for air-fuel Vs. oxy-fuel combustion options

FIG. 8

Axial CO concentration profiles for air-fuel Vs. oxy-fuel combustion options

# FIG. 9

**EP 2 492 359 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010133476 A1

- WO 2011065907 A1